# EUROPÄISCHE PATENTSCHRIFT

(11) **EP 2 220 461 B1**
(45) Veröffentlichungstag und Bekanntmachung des Hinweises auf die Patenterteilung: **20.04.2011**
(21) Anmeldenummer: 08800478.3
(22) Anmeldetag: 15.10.2008
(51) Int. Cl.: G01D 9/00

(54) **DATENLOGGER**
DATA LOGGER
ENREGISTREUR DE DONNÉES

(30) Priorität: 19.12.2007 CH 19732007
(43) Veröffentlichungstag der Anmeldung: 25.08.2010
(73) Patentinhaber: Elpro-Buchs AG, 9471 Buchs (CH)
(72) Erfinder: BISCHOF, Alois, CH-9473 Gams (CH); RUDOLF, Beat, CH-7302 Landquart (CH)
(74) Vertreter: Schreiber, Wolfgang
(86) Internationale Anmeldenummer: PCT/CH2008/000432
(87) Internationale Veröffentlichungsnummer: WO 2009/076780

(56) Entgegenhaltungen:
- WO-A-2006/133582
- US-A1- 2004 160 993
- US-A1- 2004 228 369

## Beschreibung

Die Erfindung betrifft einen Datenlogger zur Erfassung, Auswertung und Darstellung von aus den Messwerten erzeugten Klimadaten gemäss dem Oberbegriff des Patentanspruchs 1.

Elektronische Geräte der gattungsgemässen Art, sogenannte Datenlogger, werden überall dort eingesetzt, wo eine Langzeitaufnahme von Messparametern vorgenommen werden soll, ohne dass ständig Überwachungspersonal vor Ort anwesend ist. So werden Datenlogger vor allem bei Feldversuchen, bei der Überwachung von Transporten, z. B. bei der Überwachung von Beschleunigungs-, Vibrations- und Klimadaten bei LKW- oder Bahntransporten, zur Aufzeichnung von Feuchte- und Temperaturwerten in Lagerhäusern, in der Pharma- und Lebensmittelindustrie, zur Fehleranalyse von Systemen, beispielsweise zur Erfassung von Spannungsschwankungen in oder an einem System, zur Überwachung und Alarmierung bei Produktionsprozessen und bei Qualitätsstudien, in Forschung, Entwicklung und in der Ausbildung verwendet. Auch im Hobbybereich, beispielsweise bei Modellflugzeugen, kommen Datenlogger zur Aufzeichnung und Überwachung von Messdaten zum Einsatz.

Die über einen längeren Zeitraum erfassten und abgespeicherten Messdaten können bei Bedarf weiterverarbeitet, grafisch dargestellt und zur Dokumentation statistisch ausgewertet werden. Neben den Messdaten erfassen Datenlogger vielfach auch sämtliche Ereignisse, wie z.B. einen Batteriewechsel, einen Bedienereingriff oder den Wechsel einer Speicherkarte, die während eines Überwachungszeitraums am Gerät stattfinden. Damit erfüllen derartige Datenlogger auch Anforderungen der Pharma-, Lebensmittel- und Chemieindustrie, die beispielsweise unter GLP (good laboratory practice), GMP (good manufacturing practice) oder unter FDA-Standards verlangt werden. Die vom Datenlogger erfassten Messdaten werden in einem internen Gerätespeicher abgelegt und sind bei Bedarf abrufbar.

Aus dem Stand der Technik, wie z.B. der WO 2006/133582 A1, bekannte Datenlogger weisen üblicherweise eine digitale Schnittstelle, beispielsweise eine USB Schnittstelle, für den digitalen Datenaustausch mit einem externen PC oder dergleichen und wenigstens eine analoge Schnittstelle auf, an die beispielsweise ein Messfühler zur Temperaturmessung, üblicherweise ein temperaturabhängiger Widerstand, angeschlossen werden kann. Das Vorsehen mehrerer Schnittstellen bedingt ein entsprechend grosses Gehäuse. Andererseits besteht jedoch gerade beim Einsatz zur Überwachung von Klimadaten der Wunsch nach immer handlicheren und kleineren Datenloggern. Als Klimadaten werden dabei insbesondere Mittelwerte der Temperatur, die mittlere kinetische Temperatur als Mass für die in der Zeiteinheit in die Ware eingebrachte Energie, Luftfeuchtigkeit, Taupunktwerte usw. angesehen.

Aus der US 2004/0160993 A1 sind ein System und ein Verfahren bekannt, die es erlauben digitale und analoge Signale nach Art eines Multiplexers von einem Gerät zu empfangen bzw. an dieses Gerät weiter zu leiten. Das System weist beispielsweise eine USB Schnittstelle auf, die entweder wie eine digitale oder wie eine analoge Schnittstelle funktioniert.

Aufgabe der vorliegenden Erfindung ist es daher, einen Datenlogger zu schaffen, der sowohl einen digitalen Datenaustausch als auch den Anschluss von analogen Messfühlern erlaubt und dabei einen kompakten und platzsparenden Aufbau aufweist.

Die Lösung dieser Aufgaben besteht in einem Datenlogger, welcher die im kennzeichnenden Abschnitt des Patentanspruchs 1 angeführten Merkmale aufweist. Weiterbildungen und/oder vorteilhafte Ausführungsvarianten der Erfindung sind Gegenstand der abhängigen Patentansprüche.

Ein Datenlogger zur Erfassung, Auswertung und Darstellung von aus Messwerten erzeugten Klimadaten weist eine Erfassungseinheit, eine Speichereinheit und einer Steuer- und Auswerteeinheit, die mit den anderen Einheiten zur Messwertaufnahme und zur Auswertung, Darstellung und Abspeicherung der Daten in Verbindung steht, auf. Alle Geräteeinheiten sind in einem gemeinsamen Gehäuse angeordnet, an dem eine USB Schnittstelle für den digitalen Datenaustausch mit einer externen Datenverarbeitungsanlage vorgesehen ist. Die USB Schnittstelle ist sowohl als digitale Schnittstelle für den digitalen Datenaustausch als auch als analoge Schnittstelle für den Empfang analoger Messsignale betreibbar.

Indem der Datenlogger nur eine einzige USB Schnittstelle aufweist, die sowohl den digitalen Datenaustausch als auch den Empfang und die Verarbeitung analoger Messsignale erlaubt, kann das Gerätegehäuse kleiner und robuster ausgebildet werden. Dies hat den Vorteil, dass das Gerät auch in räumlich beengten Verhältnissen einsetzbar ist. Insbesondere bietet sich der erfindungsgemäss ausgestattete Datenlogger für den Einsatz bei Einrichtungen wie Dry-Gel-Transporten, Trockeneistransporten und dergleichen an, bei denen der Temperaturmessfühler bereits in das Behältnis integriert ist. Der Behälter muss nur noch das entsprechende mechanische Gegenstück zur USB Schnittstelle des Datenloggers aufweisen. Der Verzicht auf eine separate analoge Schnittstelle für den Anschluss von externen Messfühlern wirkt sich auch vorteilhaft auf die Kosten des Datenloggers aus Durch die Verwendung der USB Schnittstelle auch für den Empfang analoger Messsignale entfallen separate Anschlussleitungen für die Übertragung der analogen Messsignale. Der Datenlogger ist noch universeller einsetzbar; beispielsweise kann der Datenlogger mit jedem Klima- oder Kühlschrank verbunden werden, der mit einem Messfühler ausgestattet ist und das entsprechende mechanische Gegenstück zu der USB Schnittstelle am Datenlogger aufweist. Der USB Standard ist international durchgesetzt. Er ist robust und weist je nach Bauweise des mechanischen USB Anschlusses nur einen geringen bis sehr geringen Platzbedarf auf. Es versteht sich, dass unter der USB-Schnittstelle nicht das USB Protokoll zu verstehen ist, sondern dass sich der Begriff in erster Linie auf die mechanische Ausbildung der USB Schnittstelle bzw. des USB Anschlusses bezieht. Eine USB Schnittstelle ist 4-polig ausgebildet und erlaubt dadurch den Anschluss sowohl klassischer zweipoliger Messfühler (beispielsweise einfache temperaturabhängige Widerstände) als auch komplexerer vierpoliger Messeinrichtungen.

Grundsätzlich kann der Datenlogger mit einer Umschalteinrichtung ausgestattet sein, über die der Anwender festlegt, ob die USB Schnittstelle als eine digitale Schnittstelle für die Datenkommunikation oder als ein analoger Anschluss betrieben wird. Zweckmässigerweise ist die USB Schnittstelle jedoch mit einer innerhalb des Gehäuses angeordneten Sensorik verbunden, über welche automatisch abfragbar ist, ob der USB Anschluss als eine digitale Datenschnittstelle oder als eine analoge Messdatenschnittstelle betrieben wird. Das heisst, die Sensorik erkennt automatisch, ob eine externe Datenverarbeitungsanlage, beispielsweise ein PC, oder ein Messfühler mit der USB Schnittstelle verbunden ist und aktiviert danach automatisch die entsprechenden Geräteeinheiten.

Eine sehr zweckmässige Methode, die Betriebsart der USB Schnittstelle festzustellen, besteht darin, durch die Sensorik abzufragen, ob an der USB Schnittstelle eine Speisespannung anliegt. Der Datenlogger selbst stellt im Verbund mit einer externen Datenverarbeitungsanlage immer einen "slave" dar, der über den "master", die externe Datenverarbeitungsanlage mit einer Speisespannung versorgt wird, um den digitalen Datenaustausch zu ermöglichen. Stellt die geräteinterne Sensorik daher fest, dass an der USB Schnittstelle eine Speisespannung anliegt, wird darauf geschlossen, dass eine externe Datenverarbeitungsanlage angeschlossen ist, und die für die digitale Datenkommunikation benötigten Geräteeinheiten werden aktiviert. Stellt die Sensorik hingegen fest, dass an der USB Schnittstelle keine Speisespannung anliegt, kann dies zwei Ursachen haben. Entweder ist an die USB Schnittstelle nichts angeschlossen oder es liegt ein Messfühler an. Um zwischen diesen beiden Möglichkeiten zu unterscheiden, initiiert die Sensorik über die mit einer separaten Energieversorgung, beispielsweise einer Batterie oder einem Akkumulator, ausgestattete Erfassungseinheit eine Messung, beispielsweise eine Temperaturmessung. Ist diese erfolgreich, wird darauf geschlossen, dass ein externer Messfühler anliegt und der Empfang der analogen Messsignale wird aktiviert.

Um sicher zu gehen, dass beispielsweise für eine Temperaturüberwachung auch wirklich ein Temperaturfühler an die USB Schnittstelle angeschlossen ist, erweist es sich im Einklang mit der Erfindung als zweckmässig, wenn die Sensorik auch zur Plausibilitätsprüfung der empfangenen analogen Messsignalen ausgebildet ist. Die Plausibilitätsprüfung besteht beispielsweise darin, dass geprüft wird, ob die empfangenen analogen Messsignale innerhalb eines zu erwartenden Messwertbereichs liegen.

Die mit der USB Schnittstelle verbundene Sensorik kann innerhalb des Datenloggers als eine separate Einheit ausgebildet sein. Zweckmässigerweise ist sie jedoch Bestandteil der Steuer- und Auswerteeinheit des Datenloggers und in diese integriert. Beispielsweise wird die Steuereinheit mit Sensorik von einem Mikrocontroller gebildet.

Die Verwendung einer an einem Gehäuse eines Datenloggers vorgesehenen USB Schnittstelle sowohl als digitale Datenschnittstelle für den digitalen Datenaustausch als auch als analoge Schnittstelle für den Empfang von analogen Messsignalen, die von einem angeschlossenen Messfühler geliefert werden, erlaubt es, das Gerätegehäuse des Datenloggers kleiner und robuster auszubilden. Die USB Schnittstelle ist vielfach erprobt, global durchgesetzt, mechanisch zuverlässig und relativ unempfindlich. Dies erlaubt einen noch viel universelleren Einsatz von Datenloggern, insbesondere zur Überwachung von Klimadaten auch in beengten Platzverhältnissen.

Weitere Vorteile und Merkmale ergeben sich aus der nachfolgenden Beschreibung einer beispielsweisen Ausführungsvariante der Erfindung unter Bezugnahme auf die schematischen Zeichnungen. Es zeigen in nicht massstabsgetreuer schematischer Darstellung:
- Fig. 1: eine perspektivische Darstellung eines Datenloggers; und
- Fig. 2: ein Blockschema des Datenloggers.

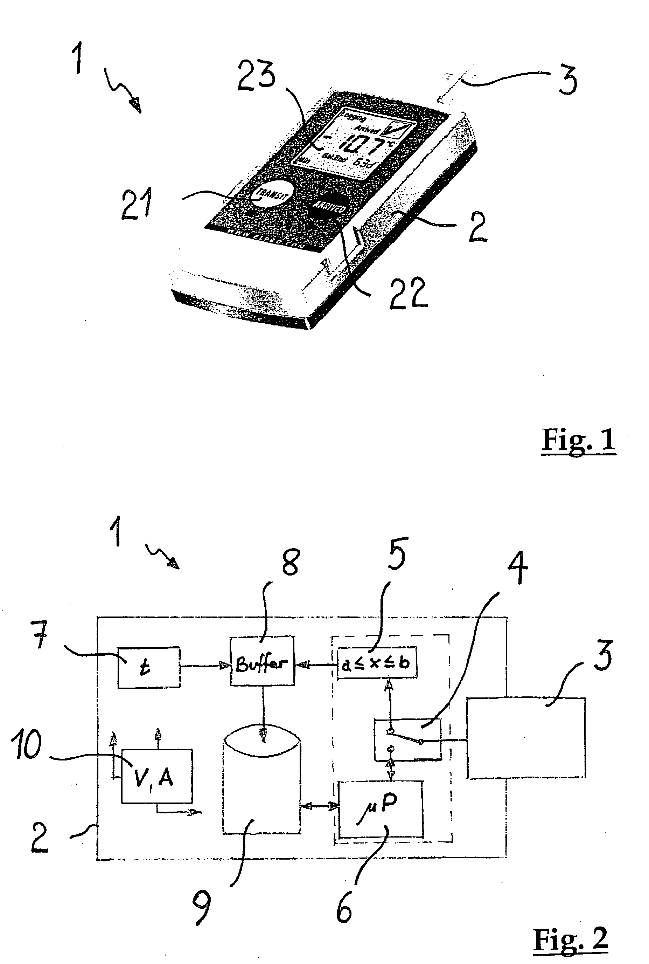

Der in Fig. 1 beispielsweise dargestellte Datenlogger trägt gesamthaft das Bezugszeichen 1. Der Datenlogger 1 weist ein Gehäuse 2 auf, das mit einer USB Schnittstelle 3 ausgestattet ist. Am Gehäuse sind zwei Tastenfelder 21, 22 vorgesehen, über die das Gerät bedienbar ist. Eine Anzeige 23 vermittelt Informationen über den Zustand des Geräts, beispielsweise über den aktuellsten Messwert, über die Aktivierung oder die Beendigung der Messwertaufzeichnung, über die Restlaufzeit des Geräts als Indikator für den Batteriezustand, usw.

Fig. 2 zeigt eine schematische Blockdarstellung des Datenloggers, der wiederum gesamthaft mit dem Bezugszeichen 1 versehen ist. Er weist ein Gehäuse 2 auf, das mit einer USB Schnittstelle ausgestattet ist. Innerhalb des Gehäuses 2 ist eine Steuer- und Auswerteeinheit 6 angeordnet, die mit einem Datenspeicher 9 in Verbindung steht. Der Datenspeicher 9 wird über einen Bufferspeicher 8, in dem die Signale eines Zeitgebers 7 und die über die USB Schnittstelle 3 und eine Sensorik 4, 5 gelieferten und digitalisierten Messsignale synchronisiert werden, mit Messdaten versorgt. Eine Energieversorgung 10, beispielsweise eine Batterie oder ein Akkumulator, versorgt die Geräteeinheiten mit der benötigten Energie.

Damit die USB Schnittstelle 3 sowohl für den Einsatz als digitale Datenschnittstelle zu einer externen Datenverarbeitungsanlage als auch für den Empfang von analogen Messsignalen eines mit der Schnittstelle 3 verbundenen Messfühlers, beispielsweise zur Temperaturmessung, einsetzbar ist, ist ein erster Abschnitt der an die USB Schnittstelle 3 anschliessenden Sensorik 4, 5 als eine Art Weichensensorik 4 für die anliegenden Signale ausgebildet. Dazu wird von der Weichensensorik 4 geprüft, ob an der USB Schnittstelle 3 eine Versorgungsspannung anliegt. Wird festgestellt, dass dies der Fall ist, schliesst die Weichensensorik 4 darauf, dass eine externe Datenverarbeitungsanlage an die USB Schnittstelle 3 angeschlossen ist und ein digitaler Datenaustausch erfolgen soll. Entsprechend wird der Signalpfad zur Auswerte- und Steuereinheit 6 und zum Datenspeicher 9 freigegeben. Wird hingegen festgestellt, dass keine Speisespannung anliegt, kann diese zwei Ursachen haben: entweder ist ein Messfühler an die USB Schnittstelle 3 angeschlossen, oder es ist gar kein Gerät angeschlossen. Um zwischen diesen beiden Zuständen unterscheiden zu können, wird durch die Weichensensorik 4 versucht, analoge Messsignale, beispielsweise Temperaturwerte zu empfangen. Werden solche empfangen, wird der Signalweg zum Bufferspeicher 8 freigegeben. Um sicherzustellen, dass die anliegenden analogen Signale auch tatsächlich Messsignale sind, werden diese in einem zweiten Abschnitt 5 der Sensorik auf Plausibilität überprüft. Dazu wird beispielsweise abgefragt, ob die empfangenen Messsignale innerhalb eines Messintervalls {a, b } liegen. Die digitalisierten Messsignale werden schliesslich zusammen mit den zugehörigen Zeitdaten über den Bufferspeicher 8 an die Speichereinheit 9 weitergeleitet.

Die Sensorik 4, 5 zur Überprüfung der an der USB Schnittstelle 3 anliegenden Signale kann als eine separate Einheit ausgebildet sein. Zweckmässigerweise ist die Sensorik 4, 5 jedoch in die Steuer- und Auswerteeinheit 6 integriert. Dies ist in Fig. 2 durch ein sich über die Sensorik und den Mikrocontroller erstreckende strichlierte Umrandung angedeutet.

Die Verwendung einer am Gehäuse 2 des Datenloggers 1 vorgesehenen USB Schnittstelle 3 sowohl als digitale Datenschnittstelle für den digitalen Datenaustausch als auch als analoge Schnittstelle für den Empfang von analogen Messsignalen, die von einem angeschlossenen Messfühler geliefert werden, erlaubt es das Gerätegehäuse 2 des Datenloggers 1 kleiner und robuster auszubilden. Die USB Schnittstelle 3 ist vielfach erprobt, global durchgesetzt, mechanisch zuverlässig und relativ unempfindlich. Dies erlaubt einen noch viel universelleren Einsatz von Datenloggern, insbesondere zur Überwachung von Klimadaten auch bei beengten Platzverhältnissen.

## Patentansprüche

1. Datenlogger zur Erfassung, Auswertung und Darstellung von aus Messwerten erzeugten Klimadaten, mit einer Erfassungseinheit, einer Speichereinheit und einer Steuer- und Auswerteeinheit, die mit den anderen Einheiten zur Messwertaufnahme und zur Auswertung, Darstellung und Abspeicherung der Daten in Verbindung steht, wobei alle Geräteeinheiten in einem gemeinsamen Gehäuse (2) angeordnet sind und am Gehäuse (2) eine USB Schnittstelle (3) für den digitalen Datenaustausch mit einer externen Datenverarbeitungsanlage vorgesehen ist, wobei die USB Schnittstelle (3) auch für den Empfang analoger Messsignale ausgebildet ist und mit einer innerhalb des Gehäuses (2) angeordneten Sensorik (4, 5) verbunden ist, über welche automatisch abfragbar ist, ob der USB Anschluss (3) als digitale Datenschnittstelle oder als analoge Messdatenschnittstelle betrieben wird, indem ein Abschnitt (4) der Sensorik (4, 5) zur Abfrage einer an der USB Schnittstelle (3) anliegenden Speisespannung ausgebildet ist, **dadurch gekennzeichnet, dass** ein zweiter Abschnitt (5) der Sensorik (4, 5) zur Plausibilitätsprüfung von empfangenen analogen Messsignalen ausgebildet ist.

2. Datenlogger nach Anspruch 1, **dadurch gekennzeichnet, dass** die Sensorik (4, 5) Bestandteil der Steuer- und Auswerteeinheit (6) ist.

3. Verfahren zum Betrieb eines Datenloggers (1) zur Erfassung, Auswertung und Darstellung von aus Messwerten erzeugten Klimadaten, der mit einer Erfassungseinheit, einer Speichereinheit und einer Steuer- und Auswerteeinheit, die mit den anderen Einheiten zur Messwertaufnahme und zur Auswertung, Darstellung und Abspeicherung der Daten in Verbindung steht, ausgestattet ist, wobei alle Geräteeinheiten in einem gemeinsamen Gehäuse (2) angeordnet sind und am Gehäuse (2) eine USB Schnittstelle (3) für den digitalen Datenaustausch mit einer externen Datenverarbeitungsanlage vorgesehen ist, wobei automatisch geprüft wird, ob die USB Schnittstelle (3) als eine digitale Datenschnittstelle oder als eine analoge Schnittstelle für den Empfang analoger Messsignale betrieben wird, indem geprüft wird, ob an der USB Schnittstelle (3) eine Speisespannung anliegt und bei Abwesenheit einer Speisespannung ein Messvorgang ausgelöst wird, **dadurch gekennzeichnet, dass** empfangene analoge Messsignale einer Plausibilitätsprüfung unterzogen werden.

## Claims

1. Data logger for detecting, evaluating and displaying climate data generated from measured values, comprising a detecting unit, a storage unit and a control and evaluation unit which is connected to the other units for recording measured values and for evaluating, displaying and storing the data, wherein all the equipment units are arranged in a common housing (2) and on the housing (2) is provided a USB interface (3) for digital data exchange with an external data processing apparatus, the USB interface (3) also being configured to receive analogue measuring signals and being connected to sensor means (4, 5) arranged inside the housing (2), by means of which an automatic check can be carried out to determine whether the USB connection (3) is being operated as a digital data interface or as an analogue measured data interface, by configuring a section (4) of the sensor means (4, 5) for interrogating a supply voltage applied to the USB interface (3), **characterised in that** a second section (5) of the sensor means (4, 5) is configured for plausibility testing of analogue measurement signals received.

2. Data logger according to claim 1, **characterised in that** the sensor means (4, 5) is part of the control and evaluation unit (6).

3. Method of operating a data logger (1) for detecting, evaluating and displaying climate data generated from measured values, which is equipped with a detecting unit, a storage unit and a control and evaluation unit which is connected to the other units for recording measured values and for evaluating, displaying and storing the data, wherein all the equipment units are arranged in a common housing (2) and on the housing (2) is provided a USB interface (3) for digital data exchange with an external data processing apparatus, wherein a check is carried out automatically to determine whether the USB interface (3) is being operated as a digital data interface or as an analogue interface for receiving analogue measurement signals, by testing whether a supply voltage is being applied to the USB interface (3) and, in the absence of a supply voltage, a measuring process is initiated, **characterised in that** analogue measurement signals received are subjected to plausibility testing.

## Revendications

1. Enregistreur de données pour le recueil, l'interprétation et la représentation de données climatiques générées à partir de valeurs de mesure, comprenant une unité de recueil de données, une unité de mémorisation et une unité de pilotage et d'interprétation, laquelle est reliée aux autres unités d'enregistrement de valeurs de mesure et d'interprétation, de représentation et de mémorisation des données, dans lequel toutes les unités de l'instrument sont installées dans un boîtier (2) commun et une interface USB (3) est prévue sur le boîtier (2) pour l'échange numérique de données avec un dispositif externe de traitement de données, l'interface USB (3) étant également construite pour la réception de signaux de mesure analogiques et étant relié à un système de capteur (4, 5) disposé à l'intérieur du boîtier (2), par lequel est générée une interrogation automatique demandant si la connexion USB (3) est utilisée en tant qu'interface numérique de données ou en tant qu'interface analogique de données de mesure, une partie (4) du système de capteur (4, 5) étant construite pour interroger une tension d'alimentation appliquée à l'interface USB (3), **caractérisé en ce qu'**une seconde partie (5) du système de capteur (4, 5) est construite pour la vérification de plausibilité des signaux de mesure analogiques reçus.

2. Enregistreur de données selon la revendication 1, **caractérisé en ce que** le système de capteur (4, 5) fait partie de l'unité de pilotage et d'interprétation (6).

3. Procédé de fonctionnement d'un enregistreur de données (1) pour le recueil, l'interprétation et la représentation de données climatiques générées à partir de valeurs de mesure, qui est équipé d'une unité de recueil, d'une unité de mémorisation et d'une unité de pilotage et d'interprétation, laquelle est reliée aux autres unités pour l'enregistrement des valeurs de mesure et pour l'interprétation, la représentation et la mémorisation des données, dans lequel toutes les unités de l'instrument sont installées dans un boîtier (2) commun et une interface USB (3) est prévue sur le boîtier (2) pour l'échange numérique de données avec un dispositif externe de traitement de données, et dans lequel il est vérifié automatiquement si l'interface USB (3) fonctionne en tant qu'interface numérique de données ou en tant qu'interface analogique de données pour la réception de signaux de mesure analogiques en vérifiant si une tension d'alimentation est appliquée à l'interface USB (3) et si, en l'absence d'une tension d'alimentation, un processus de mesure se déclenche, **caractérisé en ce que** les signaux de mesure analogiques reçus sont soumis à une vérification de plausibilité.
